# EUROPÄISCHE PATENTSCHRIFT

(11) **EP 3 593 063 B1**
(45) Veröffentlichungstag und Bekanntmachung des Hinweises auf die Patenterteilung: **28.04.2021**
(21) Anmeldenummer: 18713567.8
(22) Anmeldetag: 27.02.2018
(51) Int. Cl.: F24H 4/02, F24H 9/02

(54) **MODULARES WÄRMEPUMPENSYSTEM**
MODULAR HEAT PUMP SYSTEM
SYSTÈME DE POMPE À CHALEUR MODULAIRE

(30) Priorität: 06.03.2017 DE 102017203626
(43) Veröffentlichungstag der Anmeldung: 15.01.2020
(73) Patentinhaber: Glen Dimplex Deutschland GmbH, 95326 Kulmbach (DE)
(72) Erfinder: RAMMENSEE, Jens, 95030 Hof (DE); SHIRKHANI, Ghanbar, 95119 Naila (DE)
(74) Vertreter: FDST Patentanwälte
(86) Internationale Anmeldenummer: PCT/EP2018/054842
(87) Internationale Veröffentlichungsnummer: WO 2018/162287

(56) Entgegenhaltungen:
- EP-A2- 2 116 789
- WO-A2-2008/071419
- DE-A1- 3 303 125
- DE-U1- 7 710 968

## Beschreibung

Die Erfindung betrifft ein modulares Wärmepumpensystem.

Wärmepumpen, insbesondere sogenannte Kompressionswärmepumpen für den häuslichen Bereich werden in unterschiedlichsten Ausstattungsvarianten und Leistungsklassen bereitgestellt. Die Wärmepumpen für den häuslichen Bereich werden dabei häufig als Luft-Wasser-Wärmepumpen entweder in Monoblockbauweise oder auch in Split-Bauweise gefertigt. Bei diesen wird Wärme aus der Umgebungsluft entnommen und auf ein Kältemittel übertragen, welches in einem Kältemittelkreislauf in an sich bekannter Weise geführt und auf ein höheres Temperaturniveau gebracht wird. Derartige Wärmepumpen eignen sich generell sowohl zum Heizen in einem Heizbetrieb als auch zum Kühlen in einem Kühlbetrieb (reversible Wärmepumpe). Ergänzend werden die Wärmepumpen typischerweise auch zur Brauchwassererwärmung eingesetzt. Wird als Wärmequelle ein (flüssiges) Wärmeträgermedium verwendet, insbesondere Sole oder auch Wasser / Glykol-Gemische, so werden üblicherweise Geräte in Monoblockbauweise gefertigt, die ausschließlich für die Innenaufstellung konzipiert sind. Bei der Split-Bauweise ist der Verdampfer jeweils in einem Außenbereich in einem Splitgerät integriert.

Weiterhin hat sich die Bezeichnung "Kompaktwärmepumpe" etabliert, mit der eine Wärmepumpe bezeichnet ist, die aus allen Komponenten des Wärmepumpenkreislaufs, einem Warmwasserspeicher und der erforderlichen Hydraulik inkl. der Pumpen besteht. Derartige Kompaktwärmepumpen sind bezüglich ihrer Heizleistung und damit dem maximalen Volumen des Warmwasserspeichers begrenzt, beispielsweise auf 12 bis 15 kW, und werden werksseitig vorgefertigt und anschlussfertig geliefert.

Bei einer Monoblock-Wärmepumpe sind in einer Einheit die Hauptkomponenten des Wärmepumpenkreislaufs sowie der Regelung innerhalb eines gemeinsamen Gehäuses angeordnet. Monoblock-Anlagen sind sowohl für eine Außenaufstellung als auch für eine Innenaufstellung erhältlich. Bei derartigen Anlagen wird bei der Montage in den Kältekreislauf nicht mehr eingegriffen, es wird nunmehr noch die Hydraulik zum Anschließen der Heizungskomponenten und beispielsweise des externen Wärmträgers (Sole) vorgenommen. Im Unterschied zur MonoblockBauweise besteht die Wärmepumpe bei der Split-Bauweise aus zwei Teilen mit jeweils getrennten Gehäusen. Üblicherweise ist dabei der Verdampfer, der Verdichter, das Expansionsventil der Wärmepumpe sowie der erforderliche Verdampferlüfter in einer Außeneinheit des Split-Gerätes integriert. Die restlichen Komponenten des Kältemittelkreislaufs der Wärmepumpe, beispielsweise der Kondensator, die Regelung, weitere Umwälzpumpen, sind in einer Inneneinheit der Wärmepumpe integriert. Die beiden Einheiten sind dabei über Kältemittelleitungen miteinander verbunden. Sämtliche wasserführende Komponenten sind dabei typischerweise innerhalb des Gebäudes angeordnet.

Aufgrund dieser vielfältigen Bauweisen für Wärmepumpenanlagen speziell für den häuslichen Bereich, also in einem Leistungsbereich beispielsweise bis maximal 16 kW, sind daher unterschiedlichste Varianten möglich, die herstellerseitig zu einem nicht unerheblichen Konfektionierungs- und Planungsaufwand führen. Aufgrund der weitgehend individuellen Konfektionierung und Montage vor Ort führt dies im Service-Fall auch zu einem hohen Aufwand.

Aus der EP 2 116 789 A2 ist eine in Modulbauweise ausgebildete Heizzentrale zu entnehmen, bei der innerhalb eines gemeinsamen Rahmengestells eine Wärmepumpe sowie beispielsweise ein Gaskessel angeordnet sind. Zusätzlich ist ein Pufferspeicher vorgesehen. Durch die Modulbauweise lassen sich die einzelnen Komponenten der Heizzentrale bei der Montage in einen dafür vorgesehenen Rahmen montieren.

Aus der DE 77 10 968 U1 ist ein anschlussfertiges Heizgerät zu entnehmen, welches gebildet ist durch einen Bauteilsatz aus drei etwa gleichgroßen Einzelgehäusen, die unterschiedliche Komponenten einer Wärmepumpe aufnehmen, wobei ein erstes Einzelgehäuse einen Verdichter und einen Verflüssiger enthält, ein zweites Einzelgehäuse eine Verdampfer und das dritte Einzelgehäuse einen Ventilator enthält.

Ausgehend hiervon liegt der Erfindung die Aufgabe zugrunde, eine möglichst große Modellvielfalt herstellerseitig anbieten zu können bei gleichzeitig geringem Aufwand für die Auslegung, Konfektionierung und Montage.

Die Aufgabe wird gemäß der Erfindung gelöst durch ein modulares Wärmepumpensystem mit den Merkmalen des Anspruches 1. Bevorzugte Weiterbildungen sind in den Unteransprüchen enthalten.

Das Wärmepumpensystem weist mehrere, insbesondere vier Modultypen auf, nämlich ein Kältekreismodul, ein Hydraulikmodul, ein Warmwassermodul sowie optional ein Wärmequellenmodul. Jeder Modultyp lässt sich in mehreren Modulvarianten ausgestalten, sodass sich durch die Kombination der Modultypen in unterschiedlichen Modulvarianten unterschiedliche Wärmepumpentypen ohne Weiteres zusammenstellen lassen. Daneben lassen sich Wärmepumpen eines gleichen Typs jedoch mit unterschiedlichen Leistungen zusammenstellen.

Unter unterschiedliche Wärmepumpentypen wird hierbei verstanden, dass die unterschiedlichen Typen zueinander einen konzeptionell unterschiedlichen Aufbau aufweisen, bei dem sich die Anordnung der unterschiedlichen Modultypen unterscheiden. Beispielsweise sind gemäß einem ersten Wärmepumpentyp die Module in einer gemeinsamen Säule angeordnet und gemäß einem zweiten Wärmepumpentyp ist zumindest eines der Module getrennt aufgestellt.

Unter unterschiedlichen Modulvarianten eines jeweiligen Modultyps wird verstanden, dass die einzelnen Varianten sich hinsichtlich ihrer Baukomponenten unterscheiden. Insbesondere unterscheiden sich die Modulvarianten eines jeweiligen Modultyps im Hinblick auf die Leistung, für die das jeweilige Modul ausgebildet ist. Alternativ oder ergänzend unterscheiden sich die Modulvarianten eines Modultyps beispielsweise auch durch unterschiedliche Funktionalitäten. So können bei einigen Modulvarianten beispielsweise Zusatzfunktionalitäten integriert sein. So kann beispielsweise eine Variante des Hydraulikmoduls zum Anschluss nur eines Heizkreises und eine zweite Variante zum Anschluss von zwei Heizkreisen (Nieder-Hochtemperatur) ausgebildet sein. Auf Seiten des Kältekreismoduls unterscheiden sich die Varianten funktional beispielsweise durch die Ausbildung des Verdampfers zum Einen als Luft-Kältemittel- Wärmetauscher Verdampfer und zum Anderen als Flüssigkeit - Kältemittel-Wärmetauscher.

Das Kältekreismodul ist dabei in einem ersten Tragrahmen untergebracht, innerhalb dessen vorzugsweise alle Komponenten des Kältekreismoduls integriert sind, zumindest jedoch ein Kältekreis mit einem darin enthaltenen Kältemittel und der erforderlichen Verrohrung, wobei das Kältekreismodul hierbei zumindest einen Verdichter, einen ersten Wärmeübertrager, der in einem Heizbetrieb als Kondensator zur Übertragung von Wärme zwischen dem Kältemittel und einem verbraucherseitigen Medium ausgebildet ist, sowie einem zweiten Wärmeübertrager, der im Heizbetrieb als Verdampfer zur Übertragung von Wärme zwischen einem umgebungsseitigen Medium und dem Kältemittel ausgebildet ist, aufweist.

Alternativ zum zweiten Wärmeübertrager weist das Kältekreismodul einen Kältemittelanschluss für eine Kältemittelleitung zu dem Wärmequellenmodul mit einem darin angeordneten zweiten Wärmeübertrager auf. Weiterhin weist das Kältekreismodul einen verbraucherseitigen Hydraulikanschluss für eine Wärmeträgerleitung zum Hydraulikmodul sowie schließlich eine erste Steuereinheit zur Regelung des Kältekreislaufs auf. Der Kältekreis lässt sich bevorzugt reversibel also sowohl in einem Heizbetrieb als auch in einem Kühlbetrieb betreiben.

Insgesamt ist mit dem Kältekreismodul eine in sich geschlossene Einheit innerhalb eines ersten Tragrahmens geschaffen, in dem entweder sämtliche Komponenten des Kältekreis oder - bei einer externen Aufstellung des zweiten Wärmeübertragers - in Kombination mit dem optionalen Wärmequellenmodul sämtliche erforderlichen Komponenten angeordnet sind. Das Kältekreismodul lässt sich dabei in unterschiedlichen Varianten durch eine modulare Ausgestaltung, das heißt durch Austausch einzelner Komponenten, wie beispielsweise durch den Einsatz unterschiedlich ausgebildeter Verdichter, ausgestalten. Dadurch kann das jeweilige Kältekreismodul für unterschiedliche Modul-Varianten ohne Weiteres ausgebildet werden und mit den weiteren Modulen kombiniert werden.

In ähnlicher Weise ist auch das Hydraulikmodul als eine eigenständige Modul-Baueinheit ausgestaltet und in unterschiedlichen Modulvarianten verfügbar, indem die einzelnen Komponenten des Hydraulikmoduls in unterschiedlichen Varianten vorliegen und miteinander kombinierbar sind. Das Hydraulikmodul weist hierbei einen zweiten Tragrahmen auf, innerhalb dessen einige Komponenten zumindest eines Heizkreislaufs mit der erforderlichen Verrohrung angeordnet sind. Das Hydraulikmodul ist dabei eingangsseitig mit dem Kältekreismodul und ausgangsseitig mit dem Warmwassermodul verbindbar bzw. im montierten Zustand verbunden. Das Hydraulikmodul weist insbesondere zumindest eine Pumpe, ein Ventil zur Verteilung von Wärme zwischen einem Heizungsmodus und einem Warmwassermodus, ein Ausdehnungsgefäß und schließlich eine zweite Steuereinheit zur Regelung des zumindest einen Heizkreislaufes auf. Im Heizmodus wird die vom Kältekreismodul bereitgestellte Wärme dem Heizkreislauf zur Verfügung gestellt, um beispielsweise eine Fußbodenheizung, Radiatoren oder sonstige mit Warmwasser gespeiste Raumheizungen mit Wärme zu versorgen. Das Hydraulikmodul ist in bevorzugten Ausgestaltungen zum Anschluss an eine weitere Wärmeerzeugereinheit ausgebildet und weist hierzu beispielsweise eine weitere Pumpe auf. Die weitere Wärmeerzeugereinheit ist beispielsweise eine Solarthermieanlage.

Im Warmwassermodus wird die Wärme zur Erwärmung von Brauchwasser zur Verfügung gestellt. Über das Ventil wird allgemein die Wärmeverteilung für die Warmwassererwärmung sowie für die Heizung gesteuert. Es ist beispielsweise ein Proportionalventil und insbesondere ein Umschaltventil zum Umschalten zwischen Heizmodus und Warmwassermodus.

Das Warmwassermodul ist in einem dritten Tragrahmen angeordnet und ist eingangsseitig mit dem Hydraulikmodul verbindbar und im montierten Zustand verbunden. Es weist einen Warmwasserspeicher auf. Optional ist dieser Warmwasserspeicher auch unmittelbar in das Hydraulikmodul integriert, sodass auf einen zusätzlichen dritten Tragrahmen verzichtet ist. Die unterschiedlichen Varianten des Warmwassermoduls zeichnen sich dabei insbesondere durch unterschiedliche Speicherkapazitäten des Warmwasserspeichers aus.

Das optionale Wärmequellenmodul weist insbesondere einen vierten Tragrahmen auf, in dem der zweite Wärmeübertrager angeordnet ist sowie - speziell im Falle einer Ausgestaltung des zweiten Wärmeübertragers als Luft-Kältemittel-Wärmeübertragers - einen Lüfter. Ein für den Kältekreislauf erforderliches Expansionsventil ist vorzugsweise im Wärmequellenmodul integriert, alternativ im Kältekreismodul.

Das Wärmepumpensystem zeichnet sich daher allgemein durch zumindest drei Modultypen aus, nämlich dem Kältekreismodul, dem Hydraulikmodul sowie dem Warmwassermodul, die jeweils in sich abgeschlossene Baueinheiten darstellen, die lediglich untereinander verbunden werden müssen. Durch eine begrenzte Anzahl von unterschiedlichen Varianten der einzelnen Komponenten lassen sich diese Modultypen dabei in unterschiedlichen Modulvarianten ausgestalten, die dann untereinander wiederum lediglich über elektrische und/oder hydraulische Anschlüsse miteinander zu verbinden sind. Die konzeptionelle Grundidee besteht vorliegend darin, für die unterschiedlichen Modulvarianten bereits vorgefertigte, ausgelegte Systeme bereitzustellen, bei denen lediglich eine begrenzte Anzahl von einzelnen unterschiedlich ausgestalteten Komponenten (beispielsweise hinsichtlich ihrer Leistungsgröße) verwendet werden und dann diese unterschiedlichen Modultypen mit den unterschiedlichen Varianten zu kombinieren. Es erfordert daher im Vergleich zur herkömmlichen Herangehensweise einen geringeren Planungs- sowie Fertigungsaufwand. Dadurch lassen sich insgesamt die Kosten als auch die Fertigungszeit im Vergleich zu einem herkömmlichen Herangehen deutlich reduzieren. Aufgrund der modularen Ausgestaltung ist eine kompakte Lagerhaltung ermöglicht. Bei einer Bestellung durch einen Kunden kann die gewünschte Kundenkonfiguration sehr schnell bereitgestellt werden. Durch das modulare Konzept können die Fertigungszeiten zwischen Bestelleingang und Auslieferung deutlich reduziert werden.

Ein weiterer wesentlicher Gesichtspunkt ist in der Vorfertigung der einzelnen Module sowie deren Verbindung untereinander bereits beim Hersteller der Wärmepumpe zu sehen. Ein herkömmlicher Montageaufwand vor Ort auf der Baustelle durch einen Heizungsbauer ist dadurch deutlich reduziert. Vorzugsweise sind sämtliche erforderliche Verrohrungsarbeiten zwischen den einzelnen Modulen bereits erfolgt. Es ist allenfalls noch eine Verbindung über standardisierte Anschlüsse erforderlich.

Die einzelnen Modultypen also insbesondere Kältekreismodul, Hydraulikmodul sowie Warmwassermodul, sind dabei gemäß einer ersten Variante jeweils in einem eigenen individuellen Tragrahmen angeordnet, so dass die Tragrahmen (erster, zweiter, dritter Tragrahmen) beim Zusammenbau lediglich geeignet miteinander verbunden werden müssen.

Alternativ hierzu sind die einzelnen Tragrahmen durch ein gemeinsames Rahmengerüst gebildet, welches unterschiedliche Einbaubereiche - und Ebenen für die einzelnen Modultypen aufweist. Die einzelnen Modultypen werden in diesem Fall auf einen Modulträger vorbereitet und mit diesem in das gemeinsame Rahmengerüst am vorgesehenen Einbaubereich eingebaut. Die ersten, zweiten, dritten Tragrahmen weisen beispielsweise gemeinsame Längsstreben auf.

Im Hinblick auf eine möglichst einfache Kombination der unterschiedlichen Modultypen weisen dabei vorzugsweise unterschiedliche Modulvarianten eines gleichen Modultyps dabei jeweils einheitliche definierte hydraulische und/oder elektrische Anschlüsse auf. Speziell handelt es sich hierbei um Anschlüsse gleicher Art und auch gleicher Größe, die vorzugsweise darüber hinaus auch an der gleichen Position bei den unterschiedlichen Modulvarianten angeordnet sind. Hierdurch ist insgesamt eine standardisierte Anschlussmöglichkeit der einzelnen Module untereinander erhalten.

Vorzugsweise sind dabei zumindest einige und vorzugsweise alle dieser Anschlüsse zur Verbindung der einzelnen Modultypen untereinander als lösbare Verschlüsse, speziell Schnellverschlüsse, ausgebildet. Hierbei handelt es sich beispielsweise um Steckverbindungen oder auch um Schnellkupplungen. Dadurch ist der Montageaufwand möglichst gering.

Bei dem Kältekreismodul - insbesondere bei einem Wärmepumpentyp in Split-Aufstellung, also mit einem externen Wärmequellenmodul - sind die elektrischen und/oder hydraulischen Anschlüsse des Kältekreismoduls bodenseitig oder wandseitig angeordnet. Speziell die Anschlüsse für die Kältemittelleitung zu dem Wärmequellenmodul sind entweder durch den Boden hindurchgeführt oder durch die Wand hindurchgeführt. Hierfür sind in dem ersten Tragrahmen des Kältekreismoduls jeweils geeignete Durchführungen ausgebildet. Durch diese Durchführungen sind insbesondere auch elektrische Leitungen, beispielsweise Steuer- oder Sensorleitungen oder auch elektrische Versorgungsleitungen geführt.

Im Hinblick auf eine möglichst kompakte Ausgestaltung sind vorzugsweise mehrere der Tragrahmen aufeinander stapelbar. Eine jeweilige Wärmpumpe weist also eine gestapelte Anordnung von zumindest zwei Modultypen auf.

Die Tragrahmen weisen die gleiche Grundfläche auf, sodass zwei übereinander gestapelte Modultypen miteinander fluchten und einen einheitlichen Eindruck erzeugen, und beispielsweise von gemeinsamen Verkleidungsteilen umgeben sind. Für Wärmepumpen in unterschiedlichen Leistungsklassen können dabei unterschiedliche Grundflächen vorgesehen sein. So werden beispielsweise für Wärmepumpen mit höheren Leistungen, die z.B. für größergleich 9 kW ausgebildet sind, eine größere Grundfläche verwendet. Für sämtliche Leistungsklassen werden nur zwei verschiedene Grundflächen verwendet. Innerhalb einer jeweiligen Leistungsklasse weisen jedoch die Tragrahmen bzw. die Module die gleiche Grundfläche auf.

Im Hinblick auf eine möglichst einfache Ausgestaltung mit geringer Variantenvielfalt ist zudem vorgesehen, dass für die unterschiedlichen Modulvarianten eines jeweiligen Modultyps lediglich eine einzige gemeinsame Modulplatte vorgesehen ist. Auf dieser sind daher die jeweiligen Komponenten des Modultyps nach Art eines Baukastensystems aufgebaut.

Insbesondere sind allgemein das Kältekreismodul sowie das Hydraulikmodul aufeinander gestapelt. In einer ersten Variante ist das Kältekreismodul auf dem Hydraulikmodul und dieses bodenseitig angeordnet und in einer zweiten Variante ist das Kältekreismodul bodenseitig und das Hydraulikmodul auf diesem angeordnet.

Gemäß einem ersten Wärmepumpentyp ist die Wärmepumpe als eine Säule ausgebildet, bei der zumindest das Kältekreismodul, das Hydraulikmodul sowie das Warmwassermodul aufeinander gestapelt sind. Diese Ausgestaltung ist insbesondere für kleinere Kompaktwärmepumpen mit einer Heizleistung beispielsweise bis 6 kW oder bis 9 kW vorgesehen. In diesem Fall weist vorzugsweise auch der dritte Tragrahmen für das Warmwassermodul die gleiche Grundfläche wie die beiden anderen Tragrahmen auf, sodass also alle drei Modultypen die gleiche Grundfläche aufweisen.

Gemäß einem zweiten Wärmepumpentyp ist demgegenüber das Warmwassermodul getrennt aufgestellt. Hierdurch lassen sich speziell größere Warmwasserspeicher integrieren, mit denen eine säulenartige Aufeinanderstapelung vor dem Haushaltsgebrauch nicht mehr ohne Weiteres möglich wäre. Allgemein gilt für die einzelnen Komponenten das Erfordernis, dass diese in eine übliche Bauumgebung, d.h. durch normale Türöffnungen, einbringbar und auch bei vorgegebener Raumhöhe montierbar sein müssen.

Speziell bei dem getrennten Warmwassermodul des zweiten Wärmepumpentyps ist dabei das Warmwassermodul mit dem Hydraulikmodul über flexible HydraulikLeitungen sowie typischerweise auch über flexible elektrische Leitungen verbunden. Dies erlaubt eine Platz sparende Aufstellung auch in einem Eckbereich, da bei der Montage vor Ort lediglich das Hydraulikmodul mit dem Warmwassermodul über flexible Leitungen angeschlossen werden braucht und anschließend die beiden Komponenten, nämlich Warmwassermodul einerseits und eine weitere, das Hydraulikmodul aufweisende Baueinheit, dann an ihren jeweiligen vorgesehenen Ort verschoben werden können. Eine Zugänglichkeit zu den Anschlüssen zwischen Hydraulikmodul und Warmwassermodul ist in der Endposition nicht mehr erforderlich.

Wie eingangs erwähnt lassen sich Wärmepumpen einerseits als Luft-Kältemittel-Wärmepumpen als auch als flüssige Wärmeträger/Kältemittel-Wärmepumpe ausbilden. Im letzten Fall spricht man in der Regel von Sole-Kältemittel-Wärmepumpen. Bei derartigen Sole-Kältemittel-Wärmepumpen ist der zweite Wärmeübertrager, der im Heizmodus als Verdampfer arbeitet, üblicherweise mit im Kältekreismodul integriert.

Allgemein lassen sich zu den Wärmepumpentypen ein erster und ein zweiter Untertyp ausbilden, wobei bei dem ersten Untertyp das Wärmequellenmodul als separates Modul mit dem vierten Tragrahmen und getrennt vom Kältekreismodul ausgebildet ist. Beim zweiten Untertyp sind dabei die Komponenten des Wärmequellenmoduls in dem Kältekreismodul integriert. Dies betrifft insbesondere den zweiten Wärmeübertrager. Bei diesem handelt es sich häufig um einen (Platten-)Wärmetauscher, der zur Wärmeübertragung zwischen einem flüssigen Wärmeträgermedium (z.B. Sole) und dem Kältemittel ausgebildet ist.

Der erste Untertyp, bei dem das Wärmequellenmodul als separates Modul ausgebildet ist, ist vorzugsweise weiter in zwei Subtypen unterteilt, wobei gemäß dem ersten Subtyp das Kältekreismodul und das Wärmequellenmodul aufeinander gestapelt sind. Beim zweiten Subtyp ist das Wärmequellenmodul für eine Split-Aufstellung ausgebildet. Bei dem ersten Subtyp bilden daher das Kältekreismodul zusammen mit dem Wärmequellenmodul eine Art Monoblock, der speziell für die Innenaufstellung ausgebildet ist. Von einer Monoblock-Ausgestaltung ist allgemein auch beim zweiten Untertyp die Rede, bei dem die Komponenten des Wärmequellenmoduls in das Kältekreismodul integriert sind.

Die Ausgestaltung mit dem aufeinander gestapelten Kältekreismodul und Wärmequellenmodul erlaubt insgesamt eine standardisierte, einfache Anschlussmöglichkeit dieser beiden Modultypen untereinander.

Zusammenfassend lassen sich daher die Wärmepumpen in insbesondere zwei Wärmepumpentypen unterscheiden, wobei bei dem einen Typ das Warmwassermodul zu einer Säule auf anderen Modulen gestapelt ist bei dem anderen Typ das Warmwassermodul neben den anderen Modulen aufgestellt ist.

Zu jedem Wärmepumpentyp existieren insbesondere zwei Untertypen, wobei bei dem ersten Untertyp das Wärmequellenmodul getrennt ist und beim zweiten Untertyp das Wäremequellenmodul in dem Kältekreismodul integriert ist.

Der erste Untertyp lässt sich wiederum in zwei Subtypen untergliedern, wobei bei dem ersten Subtyp das Kältekreismodul und das Wärmequellenmodul nach Art eines Monoblocks aufeinandergestapelt sind. Der zweite Subtyp bildet eine Splitaufstellung, bei der das Wärmequellenmodul getrennt aufgestellt ist.

Ein jeweiliger Wärmepumpentyp lässt sich dabei zweckdienlicherweise in unterschiedlichen Leistungsvarianten ausbilden. Vorliegend sind drei oder vier Leistungsvarianten vorgesehen, speziell für eine Heizleistung von bis zu 6 kW, bis zu 9 kW, bis zu 12 kW oder bis zu 16 kW.

Mit diesen Leistungsklassen ist der typische Bereich für Ein-, Zwei- oder auch Mehrfamilienhäuser abgedeckt.

Die einzelnen Modultypen sind dabei jeweils in mehreren Modulvarianten in unterschiedlichen Leistungsvarianten ausgebildet. Für die unterschiedlichen Leistungsklassen werden dabei jeweils unterschiedliche Varianten der einzelnen Komponenten der einzelnen Modultypen eingesetzt.

Im Falle des Kältekreismoduls sind für die unterschiedlichen Leistungsklassen unterschiedlich ausgebildete Verdichter vorgesehen und verwendet. Dabei ist pro Leistungsklasse vorzugsweise genau ein Verdichter bevorratet und verwendet.

Bei dem Kältekreismodul entspricht dabei die Anzahl der unterschiedlichen Verdichter vorzugsweise exakt der Anzahl der Leistungsvarianten für die Wärmepumpe. Sind also in dem Wärmepumpensystem Wärmepumpentypen mit insgesamt vier Leistungsvarianten vorgesehen, so sind auch exakt vier Leistungsklassen für die unterschiedlichen Varianten des Kältekreismoduls vorgesehen.

Ergänzend sind für das Kältekreismodul auch unterschiedliche erste und ggf. auch zweite Wärmeübertrager für die unterschiedlichen Leistungsklassen verwendet.

In gleicher Weise sind auch für das Wärmequellenmodul für unterschiedliche Leistungsklassen ausgebildete zweite Wärmeübertrager verwendet. Zweckdienlicherweise ist die Anzahl der ersten und/oder der zweiten Wärmeübertrager dabei geringer als die Anzahl der Leistungsvarianten für die Wärmepumpe. Zumindest eine Variante der Wärmeübertrager ist also ausreichend dimensioniert, um mehrere, speziell zwei, Leistungsvarianten der Wärmepumpe abzudecken. Dadurch ist weiter die Teilevielfalt reduziert.

Im Hinblick auf die unterschiedlichen Anforderungen weist das Hydraulikmodul vorzugsweise zwei Heizkreisläufe auf. Über diese lassen sich mehrere unterschiedliche Heizungen, speziell auch in unterschiedlichen Temperaturniveaus, parallel ansteuern. Beispielsweise können hierdurch einerseits eine Niedertemperaturraumheizung, wie beispielsweise eine Fußbodenheizung, und gleichzeitig eine Hochtemperaturraumheizung, wie beispielsweise Radiatoren, an das Hydraulikmodul angeschlossen werden.

Ergänzend weist das Hydraulikmodul in bevorzugter Ausgestaltung einen Pufferspeicher auf.

Dieser Pufferspeicher dient beispielsweise als Wärmequelle in einem Abtaubetrieb (Kreislaufumkehr) für den Fall, dass ein Luft- Kältemittel-Verdampfer eingesetzt ist. Dieser wird bei Bedarf im Abtaubetrieb von Eis befreit. Speziell bei kleineren Wärmepumpen ist dieser Pufferspeicher beispielsweise im Warmwassermodul integriert, also zusätzlich neben dem Warmwasserspeicher angeordnet.

In zweckdienlicher Weiterbildung ist das Hydraulikmodul Anschluss an eine Solaranlage vorbereitet, sodass das Hydraulikmodul insgesamt an eine solche Solaranlage zur solaren Warmwasseraufbereitung anschließbar ist. Die Solaranlage bildet daher eine weitere Wärmequelle zur Erwärmung des Brauch- oder Heizungswassers. Speziell ist in diesem Fall im Hydraulikmodul eine (weitere) Umwälzpumpe zum Umwälzen eines Wärmeträgermediums für die Solaranlage angeordnet. Weiterhin ist hierfür beispielsweise ein weiterer Pufferspeicher zur Aufnahme von solar erzeugter Wärme vorgesehen, welcher insbesondere im Hydraulikmodul integriert ist.

Weiterhin ist typischerweise im Hydraulikmodul ein Sicherheitsventil für eine Entleerung im Bedarfsfall im Falle einer Überhitzung integriert. Zudem ist weiterhin ein Entleerungsstutzen für den Servicefall integriert. Schließlich ist in der Regel ein Ausdehnungsgefäß im Hydraulikmodul integriert.

Ausführungsbeispiele der Erfindung werden nachfolgend anhand der Figuren näher erläutert. Diese zeigen dabei in vereinfachten Darstellungen:
- Fig. 1: eine perspektivische Darstellung eines ersten Wärmepumpentyps, bei der die Wärmepumpe nach Art einer Säule aus einem Kältekreismodul, einem Hydraulikmodul und einem Warmwassermodul und ergänzend einem Wärmequellenmodul in Split-Aufstellung ausgebildet ist,
- Fig. 2: eine schematisierte Darstellung des ersten Wärmepumpentyps zur Erläuterung der Split-Aufstellung,
- Fig. 3A: eine Seitendarstellung zweier aufeinander gestapelter Modultypen, nämlich eines Hydraulikmoduls sowie eines auf diesem gestapelten Kältekreismoduls sowie
- Fig. 3B: zwei aufeinander gestapelte Modultypen ähnlich Fig. 3A, die von einer gemeinsamen Verkleidung umgeben sind,
- Fig. 4: eine perspektivische Darstellung eines Kältekreismoduls mit abgehenden Kältemittelleitungen zu einem Wärmequellenmodul,
- Fig. 5: ein Wärmequellenmodul mit abgehenden Kältemittelleitungen zur Verbindung mit dem Kältekreismodul,
- Fig. 6: die beiden in den Fig. 4 und 5 dargestellten Module in einer gestapelten Anordnung, die eine Monoblock-Ausgestaltung definieren,
- Fig. 7: eine schematisierte Darstellung der Modularisierung des Wärmepumpensystems mit unterschiedlichen Varianten der einzelnen Komponenten zur Erzeugung der unterschiedlichen Modulvarianten der Modultypen, über die dann unterschiedliche Wärmepumpen zusammenstellbar sind.

In den Figuren sind gleich wirkende Teile jeweils mit den gleichen Bezugszeichen versehen.

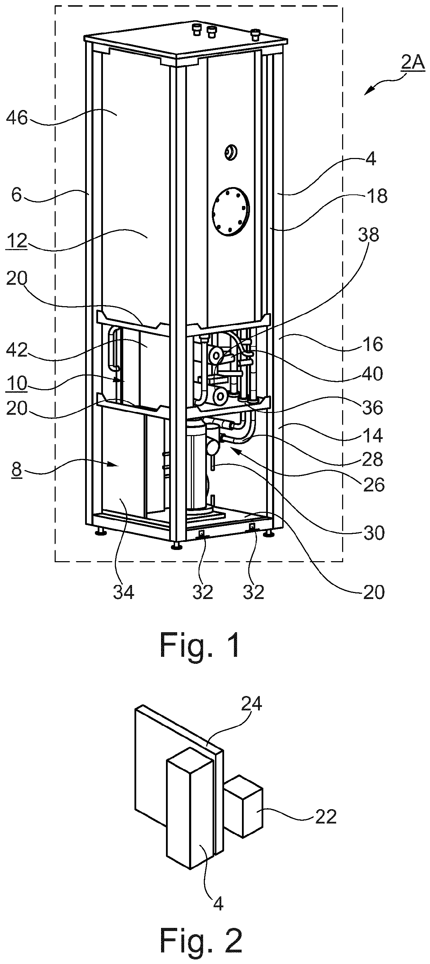

In den Fig. 1 und 2 ist ein erster Wärmepumpentyp 2A dargestellt, bei dem drei Modultypen zu einer Säule 4 aufeinander gestapelt und von einer gemeinsamen Verkleidung 6 umgeben sind.

Hierbei handelt es sich um ein Kältekreismodul 8, welches das unterste Modul darstellt, ein auf dieses gestapelte Hydraulikmodul 10, auf welches wiederum ein Warmwassermodul 12 gestapelt ist. Alle diese drei Module 8,10,12 weisen dabei jeweils einen Tragrahmen, nämlich das Kältekreismodul 8 einen ersten Tragrahmen 14, das Hydraulikmodul 10 einen zweiten Tragrahmen 16 und das Warmwassermodul 12 einen dritten Tragrahmen 18 auf. Alle drei Tragrahmen weisen dabei eine identische Grundfläche auf. Ein jeweiliger Tragrahmen 14,16,18 weist jeweils vier Vertikalstreben auf, die insbesondere L-förmig ausgebildet sind. Weiterhin weist jeder Tragrahmen 14,16,18 eine Modulplatte 20 auf, die die Grundfläche eines jeweiligen Tragrahmens 14,16,18 festlegt. Die Modulplatte 20 ist dabei jeweils zugleich Teil eines unteren Rahmengerüsts des jeweiligen Tragrahmens 14,16,18 mit die Vertikalstreben verbindenden Querstreben. Bei den Bauteilen für die Tragrahmen 14,16,18 handelt es sich insbesondere um gebogene Blechbauteile.

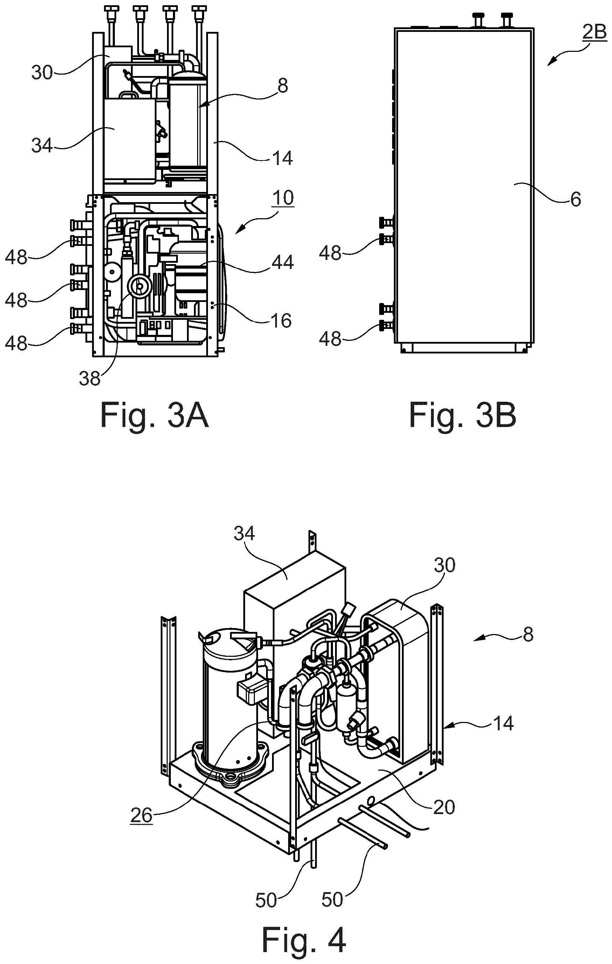

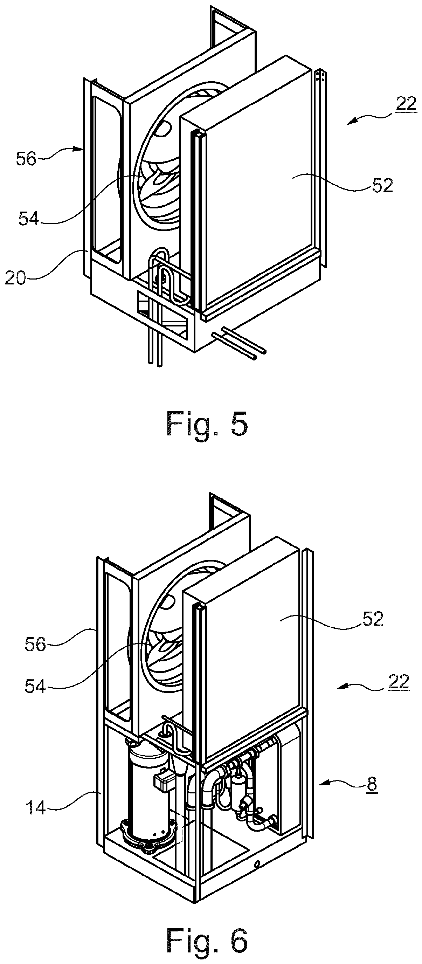

Die einzelnen Tragrahmen 14,16,18 sind dabei beispielsweise als einzelne, individuelle Tragrahmen 14, 16,18 ausgebildet, welche miteinander verbunden sind. Die Figuren 3A, 4 sowie 5 zeigen entsprechende Beispiele. Alternativ weisen die Tragrahmen 14.16.18 gemeinsame Rahmenteile, insbesondere Längsstreben auf, wie dies in insbesondere in den Fig. 1 und Fig. 6 beispielhaft dargestellt ist. Die einzelnen Module 8, 10, 12 sind dabei jeweils auf den Modulplatten 20 angeordnet, welche an den gemeinsamen Längsstreben befestigt sind.

Die Module 8,10,12 sind dabei wahlweise austauschbar oder fest verbaut. So ist beispielsweise das Hydraulikmodul 10 fest vernietet. Demgegenüber ist insbesondere das Kältekreismodul 8 beispielsweise über Schienen austauschbar befestigt, so dass es bevorzugt zusammen mit der Modulplatte 20 für einen einfachen Austausch im Servicefall herausnehmbar ist.

Der erste Wärmepumpentyp 2A gemäß den Fig. 1 und 2 ist dabei als ein erster Untertyp ausgebildet, bei dem zusätzlich zu den drei genannten Modulen 8,10,12 ein separates Wärmequellenmodul 22 als zusätzliches separates Modul vorgesehen ist. Hierbei handelt es sich um einen zweiten Subtyp, bei dem dieses Wärmequellenmodul 22 für eine Split-Aufstellung ausgebildet ist.

Eine solche ist beispielhaft anhand der Fig. 2 illustriert. Hierbei ist die Säule 4 zu erkennen, die in einem Innenraum eines Wohngebäudes aufgestellt ist. Außerhalb einer Außenwand 24 des Gebäudes ist das Wärmequellenmodul 22 aufgestellt. Dieses ist über hier nicht näher dargestellte Kältemittelleitungen mit dem Kältekreismodul 8 verbunden.

Anhand der Fig. 1 sind bereits wesentliche Komponenten der einzelnen Module 8,10,12 zu erkennen: So weist das Kältekreismodul 8 einen Kältekreis 26 mit entsprechender Verrohrung auf. Dieser Kältekreis 26 umfasst einen Verdichter 28, einen ersten Wärmeübertrager, der in Fig. 1 verdeckt ist und in einem Heizbetrieb als Kondensator 30 wirkt, sowie Kältemittelanschlüsse 32. Über diese erfolgt die Verbindung mit dem Wärmequellenmodul 22 in Split-Aufstellung über Kältemittelleitungen. Weiterhin umfasst das Kältekreismodul 8 einen Schaltkasten mit darin angeordneter Steuereinheit 34. Über die Steuereinheit 34 erfolgt die Regelung des Kältekreises 26. Das Kältekreismodul 8 weist weiterhin einen verbraucherseitigen Hydraulikanschluss 36 auf, über den das Kältekreismodul 8 mit dem Hydraulikmodul 10 verbunden ist.

Das Hydraulikmodul 10 wiederum ist über hier nicht weiter dargestellten Hydraulikanschlüsse einerseits mit dem Warmwassermodul 12 sowie mit zumindest einem Verbraucherkreislauf verbunden. Das im Kondensator 30, welcher insbesondere als Plattenwärmetauscher ausgebildet ist, erwärmte Wärmeträgermedium, insbesondere Wasser, wird im Hydraulikmodul 10 in geeigneter Weise entweder auf das Warmwassermodul 12 oder den Verbraucherkreislauf umgeschalten. Hierzu ist ein Ventil 40 vorgesehen, welches insbesondere als Umschaltventil ausgebildet ist zum Umschalten von einem Heizungsmodus, bei dem die bereitgestellte Wärme dem Verbraucherkreislauf zur Verfügung gestellt wird und einem Warmwassermodus, bei dem die zur Verfügung gestellte Wärme zur Erwärmung von Brauchwasser im Warmwassermodul 12 zur Verfügung gestellt wird. Innerhalb des Hydraulikmoduls 10 sind weiterhin einzelne Komponenten zumindest eines Heizkreislaufes integriert. Die zumindest eine Pumpe 38 ist beispielsweise Teil dieses zumindest einen Heizkreislaufs. Der Heizkreislauf wird insgesamt gebildet durch die im Hydraulikmodul 10 enthaltenen Komponenten sowie durch den Verbraucherkreislauf. Bei einigen Ausgestaltungen weist das Hydraulikmodul 10 Komponenten für zwei Heizkreisläufe auf. Beispielsweise wird über das Hydraulikmodul ein erster Niedertemperaturheizkreislauf sowie ein zweiter Hochtemperaturheizkreislauf mit Wärme versorgt.

Das Hydraulikmodul 10 kann dabei allgemein auch bivalent ausgebildet sein, um Wärme aus mehreren Wärmeerzeugern aufnehmen zu können. Neben der Wärme aus dem Kältekreismodul 8 kann allgemein das Hydraulikmodul 10 auch zur Aufnahme von Wärme aus einem zweiten Wärmeerzeuger, beispielsweise einem Gaskessel, Ölkessel, und vorzugsweise auch aus einer solaren Wärmeerzeugungsanlage (Solaranlage) aufnehmen und diese für den Heizmodus- bzw. den Warmwassermodus verwenden.

Innerhalb des Hydraulikmoduls 10 ist ein weiterer Schaltkasten mit einer zweiten Steuereinheit 42 enthalten, die zur Regelung der Wärmeverteilung auf den Verbraucherkreislauf bzw. das Warmwassermodul 12 ausgebildet ist.

Das Hydraulikmodul 10 weist weiterhin ein Ausdehnungsgefäß 44 auf, wie es beispielsweise in der Fig. 3A zu erkennen ist.

Das Warmwassermodul 12 wiederum weist einen Warmwasserspeicher 46 auf, welcher als Brauchwasserspeicher dient.

Im Zusammenhang mit den Fig. 3A,3B wird ein zweiter Wärmepumpentyp 2B erläutert. Die Fig. 3A zeigt hierbei das Hydraulikmodul 10, auf dem in diesem Fall das Kältekreismodul 8 gestapelt ist. Diese beiden Module bilden eine Baueinheit und sind von einer gemeinsamen Verkleidung 6 umgeben. Zusätzlich weist der zweite Wärmepumpentyp 2B ein hier nicht näher dargestelltes Warmwassermodul 12 auf, welches als separate Einheit vorzugsweise unmittelbar neben der in Fig. 3B dargestellten Einheit aufgestellt wird und zweckdienlicherweise in etwa die gleiche Größe hat. Das Warmwassermodul 12 ist über Anschlüsse 48 des Hydraulikmoduls 10 mit diesem verbunden. Dies erfolgt bevorzugt über biegeflexible Schläuche, die zudem über eine Überlänge verfügen, so dass nach dem Anschluss der Schläuche des Warmwassermoduls 12 relativ zu den beiden anderen Modulen 8, 10 verschoben werden kann. Die weiteren Anschlüsse 48 dienen zum Anschluss zumindest eines Verbraucherkreislaufes.

Ergänzend kann bei dem Wärmepumpentyp 2B noch ein Pufferspeicher angeordnet sein, beispielsweise als Teil des Hydraulikmoduls 10 oder als separates Modul. Bei dieser Variante ist das Hydraulikmodul 10 bevorzugt auf dem Kältekreismodul 8 angeordnet und der Pufferspeicher wiederum auf dem Hydraulikmodul. Der Pufferspeicher dient beispielsweise zur Speicherung von solar erzeugter Wärme und das Hydraulikmodul ist entsprechend zum Anschluss an einen zweiten Wärmeerzeuger (Solaranlage) neben dem Kältekreismodul 8 ausgebildet.

Anhand der Fig. 4 bis 6 wird die Zusammenstellung einer Monoblock-Einheit, bestehend aus einem Kältekreismodul 8 und einem Wärmequellenmodul 22, illustriert. Fig. 4 zeigt dabei das Kältekreismodul 8 mit dem ersten Tragrahmen 14, der Modulplatte 20, auf der die einzelnen Komponenten des Kältekreismoduls 8 angeordnet sind, insbesondere der Kondensator 30 sowie die erste Steuereinheit 34 sowie weitere Komponenten des Kältekreises 26. Die Modulplatte 20 weist einen bodenseitigen Ausschnitt auf, durch den Kältemittelleitungen 50 geführt sind. In der Fig. 4 sind dabei gleichzeitig zwei unterschiedliche Varianten dargestellt. Gemäß einer ersten Variante werden die Kältemittelleitungen 50 nach unten durch den Boden herausgeführt. Gemäß der zweiten Variante werden die Kältemittelleitungen 50 seitlich insbesondere durch eine Strebe des Tragrahmens 14 wandseitig herausgeführt.

Diese Kältemittelleitungen 50 führen zu dem in Fig. 5 dargestellten Wärmequellenmodul 22. Auch hier sind wieder die beiden unterschiedlichen Varianten zu erkennen, nämlich einerseits die Versorgung über den Boden und andererseits die Versorgung über eine Wand. Letztere Variante ist beispielsweise für eine Wandaufhängung des Wärmequellenmoduls 22 an der Außenwand 24 (vgl. beispielsweise Fig. 2) vorgesehen.

Das Wärmequellenmodul 22 weist einen zweiten Wärmeübertrager auf, welcher im Heizmodus als Verdampfer 52 ausgebildet ist. Dieser ist als Luft-Kältemittel-Wärmetauscher ausgebildet. Ihm ist zusätzlich ein Lüfter 54 zugeordnet, um Umgebungsluft durch den Verdampfer 52 hindurch zu leiten. Lüfter 54 sowie Verdampfer 52 sind wiederum auf einer Modulplatte 20 angeordnet. Das Wärmequellenmodul 22 weist einen vierten Tragrahmen 56 auf. Der vierte Tragrahmen 56 ist auf den ersten Tragrahmen des Kältekreismoduls 8 zur Ausbildung des in der Fig. 6 dargestellten Monoblocks aufgesetzt. Die beiden Tragrahmen 56,14 weisen dabei die gleiche Grundfläche auf und fluchten miteinander. Vorzugsweise sind sie wiederum von einer gemeinsamen Verkleidung 6 (nicht dargestellt) umgeben.

Das in der Fig. 5 dargestellte Wärmequellenmodul 22 eignet sich sowohl für eine Split-Aufstellung, wie es in der Fig. 2 dargestellt ist, als auch zur Ausbildung des in der Fig. 6 dargestellten Monoblocks.

Bei einer Monoblock-Ausbildung ist vorzugsweise weiterhin das Hydraulikmodul 10 angeordnet, beispielsweise unterhalb des in der Fig. 6 dargestellten Kältekreismoduls 8. Innerhalb dieses Hydraulikmoduls 10 ist ein Pufferspeicher als Wärmereservoir für einen Abtaubetrieb des Verdampfers 52 angeordnet.

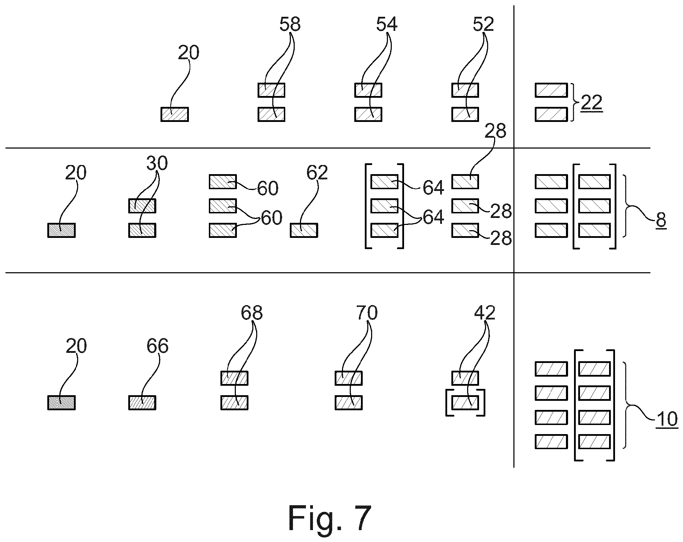

Das gesamte modular aufgebaute Wärmepumpensystem wird zusammen mit der Fig. 7 illustriert. Die schematisierte Darstellung in der Fig. 7 weist insgesamt drei Hauptzeilen sowie zwei Hauptspalten auf. Eine jeweilige Hauptzeile ist in mehrere Unterzeilen und eine jeweilige Hauptspalte in mehrere Unterspalten unterteilt.

Eine jeweilige Hauptzeile charakterisiert hierbei einen jeweiligen Modultyp, wobei die oberste Hauptzeile das Wärmequellenmodul 22, die mittlere Hauptzeile das Kältekreismodul 8 und die untere Hauptzeile das Hydraulikmodul 10 charakterisiert.

In der zweiten Hauptspalte sind jeweils unterschiedliche Modulvarianten des jeweiligen Modultyps durch jeweils ein Rechteck dargestellt. Eine jeweilige Modulvariante setzt sich aus einer speziellen Kombination von einzelnen Komponenten aus der zugeordneten Hauptzeile zusammen. Die einzelnen Komponenten gleicher Art (jedoch z. B. unterschiedlicher Leistung) sind jeweils in einer Unterspalte der jeweiligen Hauptspalte zusammengefasst. In den unterschiedlichen Zeilen einer jeweiligen Unterspalte sind dann unterschiedliche Varianten der jeweiligen Komponente dargestellt.

Bei dem Wärmepumpensystem gemäß der Fig. 7 ist für jeden Modultyp 8,10,22 jeweils genau eine Modulplatte 20 vorgesehen. Bei dem Wärmequellenmodul 22 handelt es sich insbesondere um ein Luft-Kältemittel-Modul, welches jeweils zwei Varianten des Verdampfers 52 sowie des Lüfters 54 aufweist. Weiterhin ist in dem Ausführungsbeispiel in dem Wärmequellenmodul 22 jeweils noch ein Expansionsventil 58 integriert. Auch hiervon sind zwei Varianten vorgesehen. Es lassen sich daher im Ausführungsbeispiel genau zwei Varianten des Wärmequellenmoduls 22 ausbilden. Die erste Variante ist dabei vorzugsweise für eine Wärmepumpe mit einer Heizleistung bis 12 kW und die zweite Variante für eine Wärmepumpe mit einer Heizleistung bis 16 kW ausgebildet.

Die in einer jeweiligen Unterzeile dargestellten Komponenten sind daher jeweils einer gemeinsamen Leistungsklasse zugeordnet. Beispielsweise sind die Komponenten der oberen Unterzeile für eine geringere Leistungsklasse als die Komponenten der unteren Unterzeile vorgesehen.

Bei den unterschiedlichen Varianten der Kältekreismodule 8 sind insgesamt drei Unterzeilen vorgesehen, wobei in jeder Unterzeile genau eine Leistungsklasse dargestellt ist. Es sind daher insgesamt drei Kältekreismodule 8 vorgesehen, einmal für die Leistungsklasse bis 9 kW, für die Leistungsklasse bis 12 kW und für die Leistungsklasse bis 16 kW.

In der rechten Hauptspalte sind dabei zwei Unterspalten dargestellt. Ebenso gilt dies für die unterschiedlichen Varianten der Hydraulikmodule 10 in der dritten Hauptzeile. Die rechte Unterspalte ist dabei jeweils mit einer eckigen Klammer versehen und deutet an, dass es sich hierbei um eine Variante mit einem Sole-Kältemittel-Verdampfer handelt. Die Leistungsklassen sind jedoch identisch. In der linken Hauptspalte sind entsprechend die Komponenten mit einer eckigen Klammer gekennzeichnet, die zur Ausbildung dieser sole-betriebenen Kältekreismodule 8 bzw. Hydraulikmodule 10 erforderlich sind.

Die einzelnen Komponenten des Kältekreismoduls 8 sind dabei der Kondensator 30, welcher in zwei Leistungsklassen vorgesehen ist. Insgesamt sind drei Varianten einer Verrohrung 60, lediglich ein Vierwegeventil 62 sowie jeweils drei unterschiedliche Varianten von Verdichtern 28 vorgesehen. Für den sole-betriebenen Verdampfer sind drei unterschiedliche Sole-Verdampfer-Varianten 64 vorgesehen, die also für unterschiedliche Leistungsklassen ausgelegt sind. Bei einem derartigen Sole-Verdampfer 64 ist dieser zweckdienlicherweise innerhalb des Kältekreismoduls 8 enthalten. In diesem Fall ist kein Wärmequellenmodul 22 erforderlich.

Die drei Leistungsklassen für die drei Varianten der Sole-Verdampfer 64 sowie auch für die Verdichter 28 sind dabei jeweils für die Leistungsvarianten der Wärmepumpe bis 9 kW, bis 12 kW sowie bis 16 kW ausgelegt.

Beim Hydraulikmodul 10 ist vereinfacht dargestellt ein gemeinsamer Pumpen- und Hydrauliksatz 66, zwei unterschiedliche Varianten eines Pufferspeichers 68 und zwei unterschiedliche Sätze 70 für eine bivalente bzw. nicht-bivalente Ausgestaltung vorgesehen. Weiterhin sind zwei unterschiedliche Varianten für die zweite Steuereinheit 42 vorgesehen. Die eine Steuereinheit 42 ist dabei für eine Ausgestaltung mit einem Sole-Verdampfer ausgebildet. Insgesamt sind vier unterschiedliche Hydraulikmodul-Varianten mit jeweils zwei Untertypen (einmal luftbetriebener Verdampfer, einmal sole-betriebene Verdampfer) vorgesehen.

Insgesamt ist mit dem hier beschriebenen modularen Wärmepumpensystem eine hohe Designvielfalt bei gleichzeitig möglichst geringem Konstruktions- und Fertigungsaufwand gegeben.

### Bezugszeichenliste

- 2A: erster Wärmepumpentyp
- 2B: zweiter Wärmepumpentyp
- 4: Säule
- 6: Verkleidung
- 8: Kältekreismodul
- 10: Hydraulikmodul
- 12: Warmwassermodul
- 14: erster Tragrahmen
- 16: zweiter Tragrahmen
- 18: dritter Tragrahmen
- 20: Modulplatte
- 22: Wärmequellenmodul
- 24: Außenwand
- 26: Kältekreis
- 28: Verdichter
- 30: Kondensator
- 32: Kältemittelanschlüsse
- 34: erste Steuereinheit
- 36: verbraucherseitige Hydraulikanschlüsse
- 38: Pumpe
- 40: Ventil
- 42: zweite Steuereinheit
- 44: Ausdehnungsgefäß
- 46: Warmwasserspeicher
- 48: Anschlüsse
- 50: Kühlmittelleitung
- 52: Verdampfer
- 54: Lüfter
- 56: vierter Tragrahmen
- 58: Expansionsventil
- 60: Verrohrung
- 62: Vierwegeventil
- 64: Sole-Verdampfer
- 66: Pumpen-Hydrauliksatz
- 68: Pufferspeicher
- 70: Satz

## Patentansprüche

1. Modulares Wärmepumpensystem mit folgenden Modultypen
a) einem Kältekreismodul (8)
b) einem Hydraulikmodul (10)
c) einem Warmwassermodul (12) sowie
d) einem optionalen Wärmequellenmodul (22),
wobei zu jedem Modultyp mehrere Modulvarianten vorliegen, sodass sich durch Kombination der Modultypen in unterschiedlichen Modulvarianten unterschiedliche Wärmepumpentypen oder Wärmepumpen des gleichen Typs mit unterschiedlichen Leistungen zusammenstellen lassen, wobei hierzu
a) im Kältekreismodul (8) ein Kältekreis (26) mit einem darin enthaltenen Kältemittel und der erforderlichen Verrohrung (60) angeordnet sind, wobei das Kältekreismodul (8) aufweist
- einen Verdichter (28),
- einen ersten Wärmeübertrager, der in einem Heizbetrieb als Kondensator (30) zur Übertragung von Wärme zwischen dem Kältemittel und einem verbraucherseitigen Medium ausgebildet ist,
- einen zweiten Wärmeübertrager, der im Heizbetrieb als Verdampfer (52) zur Übertragung von Wärme zwischen einem umgebungsseitigen Medium und dem Kältemittel ausgebildet ist oder mit einem Kältemittelanschluss (32) für eine Kältemittelleitung zu dem Wärmequellenmodul (22) mit einem darin angeordnete zweiten Wärmeübertrager
- einen verbraucherseitigen Hydraulikanschluss (36) für eine Wärmeträgerleitung zum Hydraulikmodul (10),
- eine erste Steuereinheit (34) zur Regelung des Kältekreislaufs
b) im Hydraulikmodul (10) Komponenten zumindest eines Heizkreislaufes mit Verrohrung (60) angeordnet sind, wobei das Hydraulikmodul (10) eingangsseitig mit dem Kältekreismodul (8) und ausgangsseitig mit dem Warmwassermodul (12) und einem Verbraucherkreislauf verbindbar ist, wobei das Hydraulikmodul (10) weiterhin aufweist
- eine Pumpe (38),
- ein Ventil (40) zur Verteilung von Wärme zwischen einem Heizungsmodus und einem Warmwassermodus,
- ein Ausdehnungsgefäß (44),
- eine zweite Steuereinheit (42) zur Regelung des Hydraulikmoduls (10)
c) das Warmwassermodul (12) eingangsseitig mit dem Hydraulikmodul (10) verbindbar ist und einen Warmwasserspeicher (46)aufweist,
d) im optionalen Wärmequellenmodul (22) der zweite Wärmeübertrager angeordnet ist, sowie - im Falle einer Ausgestaltung des zweiten Wärmeübertragers als Luft-Kältemittel-Wärmeübertrager - ein Lüfter (54), wobei
- für die unterschiedlichen Modulvarianten vorgefertigte und ausgelegte Systeme bereitgestellt sind,
- die Modultypen jeweils in sich geschlossene Baueinheiten sind, die lediglich untereinander verbunden werden müssen,
- wobei
-- entweder die einzelnen Modultypen (8,10,12,22) jeweils einen eigenen individuellen Tragrahmen aufweisen, in dem der jeweilige Modultyp (8,10,12,22) zusammengefasst ist, wobei die Tragrahmen der Modultypen (8,10,12,22) des Wärmepumpensystems beim Zusammenbau miteinander zu verbinden sind, oder
-- das Wärmepumpensystem ein gemeinsames Rahmengerüst mit unterschiedlichen Einbaubereichen für die einzelnen Modultypen (8,10,12,22) aufweist, welche jeweils auf einem Modulträger vorbereitet sind und mit diesem in den vorgesehenen Einbaubereich des gemeinsamen Rahmengerüsts eingebaut werden,
- ein jeweiliger Wärmepumpentyp (2A,2B) in drei oder vier Leistungsklassen vorgesehen ist,
- das Kältekreismodul (8) in mehreren Modulvarianten mit jeweils unterschiedlicher Leistungsklasse vorgesehen ist und für unterschiedliche Leistungsklassen unterschiedlich ausgebildete Verdichter (28) verwendet sind,
- die einzelnen Module innerhalb einer jeweiligen Leitungsklasse die gleiche Grundfläche aufweisen, und für sämtliche Leistungsklassen nur zwei verschiedene Grundflächen verwendet werden.

2. Modulares Wärmepumpensystem nach dem vorhergehenden Anspruch, wobei die unterschiedlichen Modulvarianten eines gleichen Modultyps jeweils einheitliche definierte hydraulische und/oder elektrische Anschlüsse (48) aufweisen.

3. Modulares Wärmepumpensystem nach dem vorhergehenden Anspruch, wobei mehrere, vorzugsweise alle Anschlüsse (48) zwischen zwei Modultypen als lösbare Schnellverschlüsse ausgebildet sind.

4. Modulares Wärmepumpensystem nach einem der vorhergehenden Ansprüche, wobei das Kältekreismodul (8) elektrische und/oder hydraulische Anschlüsse (32) aufweist, die für einen bodenseitigen und/oder einen wandseitigen Anschluss insbesondere des Wärmequellenmoduls (22) ausgebildet sind.

5. Modulares Wärmepumpensystem nach einem der vorhergehenden Ansprüche, wobei das Kältekreismodul (8) und das Hydraulikmodul (10) aufeinander gestapelt sind, und / oder das Hydraulikmodul (10) zwischen dem Kältekreismodul (8) und dem Warmwassermodul (12) angeordnet ist.

6. Modulares Wärmepumpensystem nach einem der vorhergehenden Ansprüche, wobei ein erster Wärmepumpentyp (2A) vorgesehen ist, der als Säule (4) ausgebildet ist und bei dem zumindest das Kältekreismodul (8), das Hydraulikmodul (10) und das Warmwassermodul (12) aufeinander gestapelt sind oder wobei ein zweiter Wärmepumpentyp (2B) vorgesehen ist, bei dem das Warmwassermodul (12) getrennt aufgestellt ist.

7. Modulares Wärmepumpensystem nach dem vorhergehenden Anspruch, wobei das Warmwassermodul (12) über flexible Leitungen mit dem Hydraulikmodul (10) verbunden ist.

8. Modulares Wärmepumpensystem nach einem der vorhergehenden Ansprüche, wobei bei den unterschiedlichen Wärmepumpentypen (2A,2B) ein erster und ein zweiter Untertyp vorgesehen ist, wobei bei dem ersten Untertyp das Wärmequellenmodul (22) als separates Modul mit einem vierten Tragrahmen (56) getrennt vom Kältekreismodul (8) ausgebildet ist und beim zweiten Untertyp die Komponenten des Wärmequellenmoduls (22) in dem Kältekreismodul (8) integriert sind.

9. Modulares Wärmepumpensystem nach dem vorhergehenden Anspruch, bei dem zu dem ersten Untertyp ein erster Subtyp vorgesehen ist, bei dem das Kältekreismodul (8) und das Wärmequellenmodul (22) aufeinander gestapelt und insbesondere als Monoblock ausgebildet sind und/oder wobei ein zweiter Subtyp vorgesehen ist, bei dem das Wärmequellenmodul (22) für eine Split-Aufstellung ausgebildet ist.

10. Modulares Wärmepumpensystem nach einem der vorhergehenden Ansprüche, wobei ein jeweiliger Wärmepumpentyp (2A,2B) in drei oder vier Leistungsvarianten speziell von bis zu 6 kW, bis zu 9kW, bis zu 12 kW und bis zu 16 kW vorgesehen sind.

11. Modulares Wärmepumpensystem nach den beiden vorhergehenden Ansprüchen, bei dem die Anzahl der unterschiedlichen Verdichter (28) der Anzahl der Leistungsvarianten für die Wärmepumpe entspricht.

12. Modulares Wärmepumpensystem nach einem der vorhergehenden Ansprüche, wobei das Kältekreismodul (8) in mehreren Modulvarianten mit jeweils unterschiedlicher Leistungsklasse vorgesehen ist und für unterschiedliche Leistungsklassen unterschiedlich ausgebildete erste Wärmeübertrager verwendet sind.

13. Modulares Wärmepumpensystem nach einem der vorhergehenden Ansprüche, wobei das Wärmequellenmodul (22) in mehreren Modulvarianten mit jeweils unterschiedlicher Leistungsklasse vorgesehen ist und für unterschiedliche Leistungsklassen unterschiedlich ausgebildete zweite Wärmeübertrager verwendet sind.

14. Modulares Wärmepumpensystem nach einem der beiden vorhergehenden Ansprüche, bei dem die Anzahl der ersten und/oder der zweiten Wärmeübertrager geringer ist als die Anzahl der Leistungsvarianten für die Wärmepumpe.

15. Modulares Wärmepumpensystem nach einem der vorhergehenden Ansprüche, wobei das Hydraulikmodul (10)
- für zwei Heizkreisläufe ausgebildet ist, und / oder
- einen Pufferspeicher (68) aufweist, und/oder
- zum Anschluss an eine Solaranlage zur solaren Warmwasseraufbereitung vorbereitet ist.

## Claims

1. Modular heat pump system comprising the following types of modules
a) a refrigerant circuit module (8)
b) a hydraulic module (10)
c) a hot water module (12), and
d) an optional heat source module (22),
wherein several module variants are available for each module type, so that different heat pump types or heat pumps of the same type with different outputs can be put together by combining the module types in different module variants, wherein for this purpose
a) a refrigerant circuit (26) with a refrigerant contained therein and the necessary piping (60) are arranged in the refrigerant circuit module (8), wherein the refrigerant circuit module (8) comprises
- a compressor (28),
- a first heat exchanger, which in a heating mode is designed as a condenser (30) for transferring heat between the refrigerant and a medium on the consumer side,
- a second heat exchanger, which in a heating mode is designed as an evaporator (52) for transferring heat between medium on the ambient side and the refrigerant, or with a refrigerant connection (32) for a refrigerant line to the heat source module (22) with a second heat exchanger arranged therein,
- a hydraulic connection (36) on the consumer side for a heat carrier line to the hydraulic module (10),
- a first control unit (34) for regulating the refrigerant circuit
b) components of at least one heating circuit with piping (60) are arranged in the hydraulic module (10), wherein the hydraulic module (10) can be connected on the input side to the refrigerant circuit module (8) and on the output side to the hot water module (12) and a consumer circuit, wherein the hydraulic module (10) further comprises
- a pump (38),
- a valve (40) for distributing heat between a heating mode and a hot water mode,
- an expansion tank (44),
- a second control unit (42) for controlling the hydraulic module (10)
c) the hot water module (12) can be connected on the input side to the hydraulic module (10) and has a hot water tank (46),
d) the second heat exchanger is arranged in the optional heat source module (22), as well as - in the case of a design of the second heat exchanger as airrefrigerant heat exchanger - a fan (54), wherein
- prefabricated and configured systems are provided for the different module variants,
- the module types respectively are self-contained units, which only need to be connected to one another,
- wherein
- either the individual module types (8, 10, 12, 22) each have their own individual support frame, in which the respective module type (8, 10, 12, 22) is combined, wherein the support frames of the module types (8, 10, 12, 22) of the heat pump system are to be connected to one another during assembly, or
- the heat pump system has a common frame structure with different installation areas for the individual module types (8, 10, 12, 22), which are each prepared on a module support and are installed with the latter in the intended installation area of the common frame structure,
- a respective heat pump type (2A,2B) is provided in three or four performance classes,
- the refrigerant circuit module (8) is provided in several module variants, each with a different performance class, and differently designed compressors (28) are used for different performance classes,
- the individual modules within a respective performance class have the same base area, and only two different base areas are used for all performance classes.

2. Modular heat pump system according to the preceding claim, wherein the different module variants of the same module type each have uniformly defined hydraulic and/or electrical connections (48).

3. Modular heat pump system according to the preceding claim, wherein several, preferably all connections (48) between two module types are designed as detachable quick-action closures.

4. Modular heat pump system according to one of the preceding claims, wherein the refrigerant circuit module (8) has electrical and/or hydraulic connections (32) which are designed for a floor-side and/or a wall-side connection, in particular of the heat source module (22).

5. Modular heat pump system according to one of the preceding claims, wherein the refrigerant circuit module (8) and the hydraulic module (10) are stacked on top of each other, and/or the hydraulic module (10) is arranged between the refrigerant circuit module (8) and the hot water module (12).

6. Modular heat pump system according to one of the preceding claims, wherein a first heat pump type (2A) is provided, which is designed as a column (4) and in which at least the refrigerant circuit module (8), the hydraulic module (10) and the hot water module (12) are stacked one on top of one another, or wherein a second heat pump type (2B) is provided, in which the hot water module (12) is set up separately.

7. Modular heat pump system according to the preceding claim, wherein the hot water module (12) is connected to the hydraulic module (10) via flexible lines.

8. Modular heat pump system according to one of the preceding claims, wherein in the different heat pump types (2A, 2B) a first and a second subtype are provided, wherein in the first subtype the heat source module (22) is designed as a separate module with a fourth support frame (56) separate from the refrigerant circuit module (8) and in the second subtype the components of the heat source module (22) are integrated in the refrigerant circuit module (8).

9. Modular heat pump system according to the preceding claim, in which a first sub-subtype is provided for the first subtype, in which the refrigerant circuit module (8) and the heat source module (22) are stacked on top of one another and are designed in particular as a monoblock, and/or in which a second subtype is provided, in which the heat source module (22) is designed for split installation.

10. Modular heat pump system according to one of the preceding claims, wherein a respective heat pump type (2A, 2B) is provided in three or four power variants, in particular of up to 6 kW, up to 9 kW, up to 12 kW and up to 16 kW.

11. Modular heat pump system according to the two preceding claims, in which the number of the different compressors (28) corresponds to the number of the power variants for the heat pump.

12. Modular heat pump system according to one of the preceding claims, wherein the refrigerant circuit module (8) is provided in several module variants, each with a different power class, and first heat exchangers of different design are used for different power classes.

13. Modular heat pump system according to one of the preceding claims, wherein the heat source module (22) is provided in several module variants, each with a different power class, and second heat exchangers of different design are used for different power classes.

14. Modular heat pump system according to one of the two preceding claims, in which the number of first and/or second heat exchangers is less than the number of power variants for the heat pump.

15. Modular heat pump system according to either of the preceding claims, wherein the hydraulic module (10)
- is designed for two heating circuits, and/or
- has a buffer tank (68), and/or
- is prepared for connection to a solar system for solar water heating.

## Revendications

1. Système modulaire de pompe à chaleur comprenant les types de modules suivants
a) un module de cycle frigorifique (8)
b) un module hydraulique (10)
c) un module d'eau chaude (12), et
d) un module optionnel de source de chaleur (22),
dans lequel plusieurs variantes de modules sont disponibles pour chaque type de module, de sorte que différents types de pompes à chaleur ou des pompes à chaleur du même type avec différentes puissances peuvent être assemblés en combinant les types de modules dans différentes variantes de modules, dans lequel à cette fin
a) dans le module de cycle frigorifique (8) un cycle frigorifique (26) avec un réfrigérant contenu dans celui-ci et le tubage nécessaire (60) sont disposés, le module de cycle frigorifique (8) comprenant
- un compresseur (28)
- un premier échangeur de chaleur qui, en mode chauffage, est conçu comme un condenseur (30) pour transférer la chaleur entre le réfrigérant et un milieu côté consommateur
- un deuxième échangeur de chaleur qui, en mode chauffage, est conçu comme un évaporateur (52) pour le transfert de chaleur entre un milieu du côté de l'environnement et le réfrigérant, ou avec un raccordement de réfrigérant (32) pour une conduite de réfrigérant vers le module de source de chaleur (22) dans lequel est disposé un deuxième échangeur de chaleur
- un raccordement hydraulique côté consommateur (36) pour une conduite de caloporteur vers le module hydraulique (10)
- une première unité de commande (34) pour la régulation du cycle frigorifique
b) dans le module hydraulique (10) des composants d'au moins un circuit de chauffage avec des conduites (60) sont disposés, le module hydraulique (10) pouvant être relié du côté de l'entrée au module de cycle frigorifique (8) et du côté de la sortie au module d'eau chaude (12) et à un circuit consommateur, le module hydraulique (10) comprenant en outre
- une pompe (38)
- une vanne (40) pour la distribution la chaleur entre un mode chauffage et un mode eau chaude,
- un vase d'expansion (44),
- une deuxième unité de commande (42) pour la régulation du module hydraulique (10)
c) le module d'eau chaude (12) peut être connecté du côté de l'entrée au module hydraulique (10) et comprend un réservoir d'eau chaude (46),
d) le deuxième échangeur de chaleur est disposé dans le module optionnel de source de chaleur (22), ainsi que - dans le cas d'une conception du deuxième échangeur de chaleur comme un échangeur de chaleur air-réfrigérant - un ventilateur (54), dans lequel
- des systèmes préfabriqués et configurés sont prévus pour les différentes variantes de modules,
- les types de modules sont respectivement des unités autonomes, qui doivent seulement être reliées les unes aux autres,
- dans lequel
- soit les différents types de modules (8, 10, 12, 22) comprennent respectivement leur propre cadre de support individuel, dans lequel le type de module respectif (8, 10, 12, 22) est combiné, les cadres de support des types de modules (8, 10, 12, 22) du système de pompe à chaleur devant être reliés les uns aux autres lors du montage, soit
- le système de pompe à chaleur comprend une structure de cadre commune avec différentes zones de montage pour les différents types de modules (8, 10, 12, 22), qui sont chacun préparés sur un support de module et sont installés avec ce dernier dans la zone de montage prévue de la structure de cadre commune,
- un type de pompe à chaleur (2A, 2B) respective est prévu dans trois ou quatre classes de performance,
- le module de cycle frigorifique (8) est prévu en plusieurs variantes de module, chacune avec une classe de performance différente, et des compresseurs (28) conçus différemment sont utilisés pour différentes classes de performance,
- les modules individuels d'une classe de performance respective ont la même surface de base, et seules deux surfaces de base différentes sont utilisées pour toutes les classes de performance.

2. Système modulaire de pompe à chaleur selon la revendication précédente, dans lequel les différentes variantes de module d'un même type de module comprennent respectivement des connexions hydrauliques et/ou électriques (48) uniformément définies.

3. Système modulaire de pompe à chaleur selon la revendication précédente, dans lequel plusieurs, de préférence toutes les connexions (48) entre deux types de modules sont conçues comme des fermetures rapides détachables.

4. Système modulaire de pompe à chaleur selon l'une des revendications précédentes, dans lequel le module de cycle frigorifique (8) comprend des connexions électriques et/ou hydrauliques (32), qui sont conçues pour un raccordement côté sol et/ou côté mur, notamment du module de source de chaleur (22).

5. Système modulaire de pompe à chaleur selon l'une des revendications précédentes, dans lequel le module de de réfrigérant (8) et le module hydraulique (10) sont empilés l'un sur l'autre, et/ou le module hydraulique (10) est disposé entre le module de cycle frigorifique (8) et le module d'eau chaude (12).

6. Système modulaire de pompe à chaleur selon l'une des revendications précédentes, dans lequel un premier type de pompe à chaleur (2A) est prévu, qui est formé comme une colonne (4) et dans lequel au moins le module de cycle frigorifique (8), le module hydraulique (10) et le module d'eau chaude (12) sont empilés l'un sur l'autre, ou dans lequel un deuxième type de pompe à chaleur (2B) est prévu, dans lequel le module d'eau chaude (12) est monté séparément.

7. Système modulaire de pompe à chaleur selon la revendication précédente, dans lequel le module d'eau chaude (12) est relié au module hydraulique (10) par des conduites flexibles.

8. Système modulaire de pompe à chaleur selon l'une des revendications précédentes, dans lequel, dans les différents types de pompe à chaleur (2A, 2B), un premier et un deuxième sous-type est prévu, dans lequel, dans le premier sous-type, le module de source de chaleur (22) est conçu comme un module séparé avec un quatrième cadre de support (56) séparé du module de cycle frigorifique (8) et, dans le deuxième sous-type, les composants du module de source de chaleur (22) sont intégrés dans le module de cycle frigorifique (8).

9. Système modulaire de pompe à chaleur selon la revendication précédente, dans lequel un premier sous-sous-type est prévu pour le premier sous-type, dans lequel le module de cycle frigorifique (8) et le module de source de chaleur (22) sont empilés l'un sur l'autre et sont conçus en particulier comme un monobloc, et/ou dans lequel un deuxième sous-type est prévu, dans lequel le module de source de chaleur (22) est conçu pour un montage en split.

10. Système modulaire de pompe à chaleur selon l'une des revendications précédentes, dans lequel un type de pompe à chaleur respectif (2A, 2B) est prévu dans trois ou quatre variantes de puissance, en particulier jusqu'à 6 kW, jusqu'à 9 kW, jusqu'à 12 kW et jusqu'à 16 kW.

11. Système modulaire de pompe à chaleur selon les deux revendications précédentes, dans lequel le nombre des différents compresseurs (28) correspond au nombre des variantes de puissance de la pompe à chaleur.

12. Système de pompe à chaleur modulaire selon l'une des revendications précédentes, dans lequel le module de cycle frigorifique (8) est prévu dans plusieurs variantes de module, chacune avec une classe de puissance différente, et des premiers échangeurs de chaleur de conception différente sont utilisés pour différentes classes de puissance.

13. Système de pompe à chaleur modulaire selon l'une des revendications précédentes, dans lequel le module source de chaleur (22) est prévu en plusieurs variantes de module, chacune avec une classe de performance différente, et des deuxièmes échangeurs de chaleur de conception différente sont utilisés pour différentes classes de performance.

14. Système modulaire de pompe à chaleur selon l'une des deux revendications précédentes, dans lequel le nombre de premiers et/ou deuxièmes échangeurs de chaleur est inférieur au nombre de variantes de puissance de la pompe à chaleur.

15. Système modulaire de pompe à chaleur selon l'une des revendications précédentes, dans lequel le module hydraulique (10)
- est conçu pour deux circuits de chauffage, et/ou
- comprend un réservoir tampon (68), et/ou
- est préparé pour être raccordé à un système solaire pour le chauffage solaire de l'eau.
